# EUROPÄISCHE PATENTSCHRIFT

(11) **EP 1 217 004 B1**
(45) Veröffentlichungstag und Bekanntmachung des Hinweises auf die Patenterteilung: **13.10.2004**
(21) Anmeldenummer: 01130046.4
(22) Anmeldetag: 18.12.2001
(51) Int. Cl.: C07F 9/30

(54) **Verfahren zur Herstellung von Ethan-1,2-bis(alkylphosphinsäuren)**
Process for Preparing (1,2-Ethanediyl)bis(alkylphosphinic acid)
Procédé de Preparation de l' acide (1,2-Ethanediyl)bis(alkylphosphinique)

(30) Priorität: 23.12.2000 DE 10065051
(43) Veröffentlichungstag der Anmeldung: 26.06.2002
(73) Patentinhaber: Clariant GmbH, 65929 Frankfurt am Main (DE)
(72) Erfinder: Sicken, Martin, Dr., 51149 Köln (DE); Weferling, Norbert, Dr., 50354 Hürth (DE); Schmitz, Hans-Peter, 50321 Brühl (DE)
(74) Vertreter: Clariant Service GmbH

(56) Entgegenhaltungen:
- CH-A- 437 784
- DE-A- 2 252 258
- DE-A- 19 851 730
- NIFANT'EV E E ET AL: "Reactions of acetylenes with hypophosphorous and phosphonous acids" JOURNAL OF GENERAL CHEMISTRY USSR, CONSULTANTS BUREAU. NEW YORK, US, Bd. 56, Nr. 4, 20. September 1986 (1986-09-20), Seiten 680-688, XP002165520

## Beschreibung

Die vorliegende Erfindung betrifft ein Verfahren zur Herstellung von Ethanbis(alkylphosphinsäuren) sowie die Verwendung der nach diesem Verfahren hergestellten Produkte.

Phosphinsäuren und deren Salze sind nach verschiedenen Methoden herstellbar und in großem Umfang in der Literatur beschrieben.

Organische Phosphinsäuren, deren Salze und Ester sind als Flammschutzmittel bekannt. So beschreibt die EP 0 699 708 A1 flammgeschützte Polyesterformmassen, wobei die Polyesterformmassen durch den Zusatz von Calcium- oder Aluminiumsalzen von Phosphin- oder Diphosphinsäuren flammfest ausgerüstet werden. Die vorgenannten Salze werden durch Umsetzung der entsprechenden Phosphinsäuren mit Calcium- oder Aluminiumhydroxid erhalten.

Aufgrund ihres hohen Phosphorgehaltes und vor allem wegen ihrer Zweizähnigkeit werden die Diphosphinsäuren als sehr effektive reaktive Flammschutzmittiel für Polyester, z.B. für Textil-Anwendungen, beschrieben. Dies gilt auch für die Ethanbis(methylphosphinsäure), speziell in Form ihres Glykolesters (DE 22 36 037 A1).

Die Herstellung dieser Diphosphinsäuren ist technisch aufwendig und erfolgt beispielsweise durch eine Arbuzov-Reaktion von Phosphonigsäurediestem mit Alkyldihalogeniden [P. Mastalerz, Rocziniki Chem 38 (1964), S. 61-64] und anschließende Esterspaltung. Die eingesetzten Phosphonigsäurediester werden aus den entsprechenden Phosphonigsäuredihalogeniden durch Umsetzung mit Alkoholen hergestellt.

Als weitere Möglichkeit zur Herstellung von Ethan-Diphosphinsäuren wird in der DE 23 02 523 A1 die Umsetzung von Alkylphosphonigsäureestern mit Acetylen und die anschließende Spaltung des Diesters mit HCI unter Bildung von Alkylchloriden vorgeschlagen. Auch die hier eingesetzten Alkylphosphonigsäureester werden aus den entsprechenden Phosphonigsäuredihalogeniden durch Hydrolyse und Umsetzung mit Alkoholen hergestellt.

Die vorgenannten Verfahren weisen den Nachteil auf, dass die geeigneten organischen Phosphorverbindungen zunächst auf umständliche Art und Weise hergestellt werden müssen. Dies trifft insbesondere für die Ester der alkylphosphonigen Säuren zu, die ihrerseits aus den entsprechenden Phosphonigsäuredihalogeniden, beispielsweise Methyldichlorphosphin, hergestellt werden. Methyldichlorphosphin wird in aufwendigen Synthesen hergestellt (Houben-Weyl, Band 12/1, S. 306). Es werden zudem Nebenprodukte gebildet, die, wie zum Teil auch die vorgenannten Ausgangsprodukte, giftig, selbstentzündlich und/oder korrosiv, also höchst unerwünscht sind.

Nachteilig ist ebenfalls, dass alle bislang beschriebenen Verfahren zur Herstellung von Ethanbis(alkylphosphinsäuren) als letzten Schritt die technisch schwierige Spaltung der entsprechenden Ester vorsehen.

Die Literaturstelle Nifant'ev et al. in Journal of general chemistry, USSR, consultant's bureau, New York, Bd. 56, Nr. 4, Seiten 680 bis 688, beschreibt das Herstellen von längerkettigen Alkyl-bis-(arylphosphinsäuren) durch Umsetzen der entsprechenden phosphonigen Säuren mit Alkinen. Der Fachmann erhält dort aber keine Hinweise, wie er zu den entsprechenden phosphonigen Säuren kommen soll, die mit den Alkinen umzusetzen sind.

Die DE-A 198 51 730 beschreibt das Herstellen von Alkali- oder Erdalkalisalzen von Alkylphosphonigen Säuren und dialkylphosphonigen Säuren aus elementarem, gelbem Phosphor und Alkylhalogeniden. Aus den so hergestellten Salzen sollen die freien Säuren durch lonenaustausch oder durch Destillation erhältlich sein. Die DE-A enthält aber keine Hinweise, wie aus den hergestellten Salzen eine Mischung von Säuren freigesetzt, eine Komponente der Mischung verestert und dieser Ester aus der Mischung isoliert werden soll.

Der Erfindung liegt daher die Aufgabe zugrunde, ein Verfahren zur Herstellung von Ethanbis(alkylphosphinsäuren) zur Verfügung zu stellen, das die vorgenannten Nachteile vermeidet und auf besonders einfache und wirtschaftliche Art und Weise durchführbar ist und bei dem einheitliche Produkte in hoher Ausbeute erhalten werden. Auch sollte ein solches Verfahren den bisher bekannten umwelttechnisch deutlich überlegen sein. Bei dem erfindungsgemäßen Verfahren geht man von leicht zugänglichem elementarem gelbem Phosphor als Edukt aus und verzichtet auf die aufwendige Diphosphinsäureester-Spaltung.

Diese Aufgabe wird gelöst durch ein Verfahren zur Herstellung von Ethanbis(alkylphosphinsäuren) durch
a) Umsetzung von elementarem gelbem Phosphor mit Alkylhalogeniden in Gegenwart von Alkali- oder Erdalkalihydroxid zu einem Gemisch, welches als Hauptbestandteile die Alkali- und/oder Erdalkalisalze der Alkylphosphonigen, Phosphorigen und Hypophosphorigen Säure enthält, und
b) Freisetzung der Alkylphosphonigen, Phosphorigen und Hypophosphorigen Säure durch Zugabe von Mineralsäuren sowie gleichzeitiger Ausfällung der Alkali- bzw. Erdalkali-lonen in Form ihrer Mineralsalze, wonach man
c) die alkylphosphonige Säure aus der Mischung der alkylphosphonigen, Phosphorigen und hypophosphorigen Säure verestert,
d) den Ester der alkylphosphonigen Säure aus der Mischung isoliert und zur alkylphosphonigen Säure verseift,
e) durch radikal-initiierte Umsetzung mit Alkinen bei denen es sich um Ethin, Propin, 1-Butin, 2-Butin, 1-Phenylbutin, 1-Pentin, 2-Pentin, 1-Hexin, Propargylalkohol, Butindiol, Propiolsäure, und Acetylendicarbonsäure-Derivate handelt, aus der Alkylphosphonigen Säure die entsprechende Ethanbis(alkylphosphinsäure) der allgemeinen Formel (I), 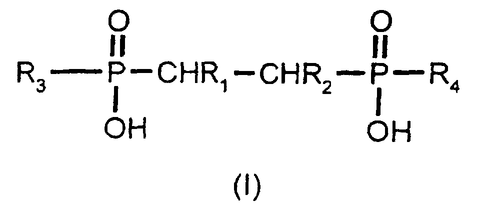
in der R₁ und R₂ gleich oder verschieden sein können und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen, R₃ und R₄ gleich oder verschieden sein können und für eine - ggf. substituierte - Alkylgruppe mit 1 bis 20 C-Atomen steht, herstellt.

Das erfindungsgemäße Verfahren weist gegenüber den bisher bekannten Verfahren erhebliche Vorteile auf, da es u.a. Phosphine und Phosphonigsäure-dihalogenide als Edukte vermeidet, keine halogenierten organischen Nebenprodukte erzeugt, keine aufwendigen Ester-Spaltung von Phosphinsäuren beinhaltet und auch in der Produktverteilung eine positive Bilanz aufweist. Das Verfahren ist sehr effektiv und wirtschaftlich durchzuführen.

Bevorzugt werden als Alkylhalogenide Methylchlorid oder Methylbromid verwendet. Bevorzugt wird die Reaktion im Schritt a) in einem Zwei-Phasen-System aus wässrigem Alkali- oder Erdalkalihydroxid oder Gemischen davon und einem organischen Lösungsmittel durchgeführt.

Bevorzugt werden im Schritt a) als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet.

Besonders bevorzugt wird als organisches Lösungsmittel Toluol, allein oder in Kombination mit Alkoholen, verwendet.

Bevorzugt wird die Reaktion in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt beträgt im Schritt a) die Temperatur bei der Reaktion -20 bis +60°C.

Besonders bevorzugt beträgt die Temperatur -10 bis +30°C.

Bevorzugt wird die Reaktion unter einem Druck von 0 bis 10 bar durchgeführt.

Bevorzugt wird das erfindungsgemäße Verfahren im Schritt a) so ausgeführt, dass man den gelben Phosphor in einem Lösungsmittel oder einem Lösungsmittelgemisch suspendiert und dann mit Alkylhalogenid und einer Verbindung der Formel MOH oder M'(OH)₂ oder Gemischen davon, in denen M ein Alkalimetall und M' ein Erdalkalimetall bedeutet, umsetzt.

Bevorzugt werden der gelbe Phosphor und das Alkylhalogenid im molaren Verhältnis von 1:1 bis 1:3 miteinander umgesetzt, wobei das molare Verhältnis von gelbem Phosphor zur Verbindung der Formel MOH oder M'(OH)₂ 1:1 bis 1:5 beträgt.

Bevorzugt wird im Schritt b) durch Zugabe einer Mineralsäure neutralisiert.

Bevorzugt wird im Schritt b) durch Zugabe von Salzsäure neutralisiert.

Bevorzugt wird die Fällung der Alkali- bzw. Erdalkali-Mineralsalze mittels Austausch des Lösungsmittels Wasser durch den in Reaktionsschritt c) zu verwendenden Alkohol durchgeführt.

Bevorzugt werden im Schritt b) die in geringen Mengen enthaltenen Phosphine durch Oxidation entfernt.

Bevorzugt wird als Oxidationsmittel Wasserstoffperoxid verwendet.

Bevorzugt wird im Schritt c) die alkylphosphonige Säure mit einem linearen oder verzweigten Alkohol der allgemeinen Formel R-OH, wobei R für einen linearen oder verzweigten Alkylrest mit 1-10 Kohlenstoffatomen steht, direkt verestert.

Bevorzugt handelt es sich bei dem Alkohol um i-Butanol, n-Butanol und/oder 2-Ethylhexanol.

Bevorzugt wird vor der Veresterung das in Schritt b) ausgefällte Alkali- oder Erdalkali-Mineralsalz abfiltriert.

Die Veresterung der phosphonigen Säure zum entsprechenden Monoester kann beispielsweise durch Umsetzung mit höhersiedenden Alkoholen unter Entfernung des gebildeten Wassers durch Azeotropdestillation erreicht werden.

Bevorzugt handelt es sich bei der alkylphosphonigen Säure um Methanphosphonige Säure.

Bevorzugt wird im Schritt d) der Ester der Alkylphosphonigen Säure destillativ entfernt.

Bevorzugt wird im Schritt d) der destillierte Ester der Alkylphosphonigen Säure mit Wasser hydrolysiert und der entstandene Alkohol abdestilliert.

Bevorzugt setzt man in Schritt e) die Alkylphosphonige Säure in Gegenwart eines Radikalinitiators mit einem Alkin um.

Bevorzugt werden als Radikalstarter Azoverbindungen eingesetzt.

Bevorzugt handelt es sich bei den Azoverbindungen um kationische und/oder nicht-kationische Azoverbindungen.

Bevorzugt werden als kationische Azoverbindungen 2,2'-Azobis(2-amidinopropan)-dihydrochlorid oder 2,2'-Azobis(N,N'-dimethylenisobutyramidin)dihydrochlorid eingesetzt.

Bevorzugt werden als nicht-kationische Azoverbindungen Azobis(isobutyronitril), 4,4'Azobis(4-cyano-pentansäure), 2,2'Azobis(2-methylbutyronitril) eingesetzt.

Bevorzugt werden als Radikalstarter peroxidische anorganische und/oder peroxidische organische Radikalstarter eingesetzt.

Bevorzugt werden als peroxidische anorganische Radikalstarter Wasserstoffperoxid, Ammoniumperoxodisulfat und/oder Kaliumoperoxodisulfat eingesetzt.

Bevorzugt werden als peroxidische organische Radikalstarter Dibenzoylperoxid, Ditert.-butylperoxid und/oder Peressigsäure eingesetzt.

Eine breite Auswahl geeigneter Radikalstarter findet sich beispielsweise in Houben-Weyl, Ergänzungsband 20, im Kapitel "Polymerisation durch radikalische Initiierung" auf den Seiten 15-74.

Bevorzugt werden die Radikalstarter während der Reaktion kontinuierlich zudosiert.

Bevorzugt werden die Radikalstarter während der Reaktion in Form einer Lösung im Alkin kontinuierlich zudosiert.

Bevorzugt werden die Radikalstarter während der Reaktion in Form einer Lösung im verwendeten Lösungsmittel kontinuierlich zudosiert.

Die Ethanbis(alkylphosphinsäuren) werden hergestellt, indem die in Schritt d) erhaltene alkylphosphonige Säure in Gegenwart eines Radikalinitiators mit Alkinen gemäß Patentansprüch 1 eingesetzt wird.

Bevorzugt werden als Alkine die 1-Alkine, Propargylalkohol, Butindiol, Propiolsäure und Acetylendicarbonsäure-Derivate eingesetzt.
Besonders bevorzugt wird Ethin (Acetylen) eingesetzt.

Bevorzugt erfolgt die Umsetzung bei einer Temperatur von 40 bis 200°C.

Besonders bevorzugt erfolgt die Umsetzung bei einer Temperatur von 70 bis 130°C.

Bevorzugt erfolgt die Umsetzung in Gegenwart eines Lösungsmittels.

Bevorzugt erfolgt die Umsetzung im Lösungsmittel Essigsäure.

Bevorzugt erfolgt die Umsetzung durch Einleiten von gasförmigem Acetylen (Ethin) unter Normaldruck.

Bevorzugt erfolgt die Umsetzung unter Druck.

Bevorzugt wird das Verfahren so geführt, dass nach einem Teilumsatz die ausfallende Ethan-bis(alkylphosphinsäuren) abfiltriert wird und nach Aufstocken der verbrauchten Alkylphosphonigen Säure weiter Alkin addiert wird.

Der Gegenstand der vorliegenden Erfindung umfasst auch ein Verfahren, bei dem man gelben Phosphor mit Methylchlorid in Gegenwart von Natronlauge und dem Phasentransferkatalysator Tributylhexadecylphosphoniumbromid zum Natriumsalz der Methylphosphonigen Säure umsetzt, aus diesem durch Zusatz von Salzsäure die freie Säure freisetzt, diese mit 2-Ethyl-hexanol im Gemisch verestert, den Ester destillativ isoliert, hydrolysiert und die entstandene reine Methanphosphonige Säure mit Acetylen (Ethin) in Gegenwart eines kationischen oder nicht-kationischen Radikalstarters oder in Gegenwart eines peroxidischen Radikalstarters zur Ethanbis(methylphosphinsäure) umsetzt.

Der Gegenstand der vorliegenden Erfindung umfasst insbesondere auch ein Verfahren, bei dem man gelben Phosphor mit Methylchlorid in Gegenwart von Natronlauge und dem Phasentransferkatalysator Tributylhexadecylphosphoniumbromid zum Natriumsalz der Methylphosphonigen Säure umsetzt, aus diesem durch Zusatz von Salzsäure die freie Säure freisetzt, diese mit 2-Ethylhexanol im Gemisch verestert, den Ester destillativ isoliert, hydrolysiert und die entstandene reine Methanphosphonige Säure mit Acetylen (Ethin) in Gegenwart eines kationischen oder nicht-kationischen Radikalstarters oder in Gegenwart eines peroxidischen Radikalstarters in Essigsäure zur Ethanbis(methylphosphinsäure) umsetzt und diese kontinuierlich aus dem Reaktionsgemisch durch Umlauf-Filtration entfernt und ebenso kontinuierlich die verbrauchte Methanphosphonige Säure durch neue ersetzt.

Die gewünschten Diphosphinsäuren werden mit hoher Selektivität in hoher Reinheit erhalten.

Sowohl die Alkylphosphonigen Säuren als auch die Alkine können jeweils im Überschuss eingesetzt werden, da die Reaktionspartner immer im Molverhältnis 2 zu 1 (alkylphosphonige Säure zu Alkin) reagieren.

Technisch vorteilhaft ist die Verwendung der nach dem erfindungsgemäßen Verfahren hergestellten Ethanbis(alkylphosphinsäuren) als Ausgangsprodukte zur Herstellung von Flammschutzmitteln für thermoplastische Polymere wie Polyethylenterephthalat, Polybutylenterephthalat oder Polyamid.

Weiter vorteilhaft ist die Verwendung der nach dem erfindungsgemäßen Verfahren hergestellten Ethanbis(alkylphosphinsäuren) als Ausgangsprodukte zur Herstellung von Flammschutzmitteln für duroplastische Harze wie ungesättigte Polyesterharze, Epoxidharze, Polyurethane oder Acrylate.

Ferner möglich ist auch die Verwendung der nach dem erfindungsgemäßen Verfahren hergestellten Ethanbis(alkylphosphinsäuren) als Vorprodukte zur chemischen Synthese von anderen, phosphorhaltigen Verbindungen.

Die Erfindung wird durch das nachstehende Beispiel erläutert:

### Beispiel 1: Ethanbis(methylphosphinsäure)

### a) Umsetzung von gelbem Phosphor mit Methylchlorid

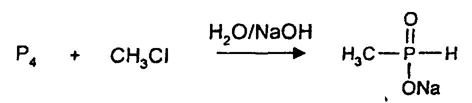

In einem 5 I Edelstahl-Druckreaktor wurde eine Lösung von 26,1 (0,05 Mol) Tributylhexadecylphosphoniumbromid in 1000 ml Toluol vorgelegt und auf 60°C vorgeheizt. Nach Zugabe von 62 g (2 Mol) gelbem Phosphor wurde unter intensivem Rühren auf -10°C abgekühlt und dann 202 g (4 Mol) Methylchlorid einkondensiert. Danach wurde innerhalb 2 Stunden 400 g 50%ige wässrige Natronlauge zudosiert, wobei die Temperatur auf -10°C gehalten wurde. Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.
Die wässrige Phase (Auswage: 920 g) enthielt 65,6 Mol % Methylphosphonige Säure, 14,9 Mol % Phosphorige Säure und 13,7 Mol % Hypophosphorige Säure und 2,8 Mol % Dimethylphosphinsäure in Form ihrer Natriumsalze sowie 3 Mol % Dimethyldiphosphin.

### b) Überführung der Na-Salze in die Säuren/NaCl-Abtrennung:

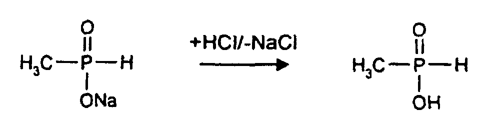

Die Lösung wurde sukzessive mit 60 g 5 %iger wässriger Wasserstoffperoxidlösung, mit 240 g 36 %iger Salzsäure sowie mit 400 g 2-Ethylhexanol versetzt. Nach Abdestillation des enthaltenen Wassers am Wasserabscheider wurde das ausgefallene Natriumchlorid abfiltriert und mit 100 g 2-Ethylhexanol gewaschen.

### c) Veresterung von Methanphosphonigsäure mit 2-Ethylhexanol im Reaktionsgemisch:

Die Ethylhexanol-Lösungen aus Beispiel 1 wurden vereinigt und unter leicht reduziertem Druck ca. 6 h am Wasserabscheider auf ca. 120°C erhitzt.

### d) Isolierung der Methanphosphonigsäure:

Das veresterte Reaktionsgemisch wurde anschließend destillativ vom überschüssigen Ethylhexanol befreit und einer Vakuumdestillation unterzögen. Bei einem Druck von 0,3 mm und einer Kopf-Temperatur von 75°C gingen 220 g Methanphosphonigsäure-2-ethylhexylester über. Das Produkt fällt in Form einer klaren, farblosen Flüssigkeit in einer Reinheit von über 99 % an, entsprechend einer Ausbeute von 58 %, bezogen auf den eingesetzten gelben Phosphor. Analysen: 16,0 % Phosphor (Theorie: 16,2 %); ³¹P-NMR: Dublett bei 34 ppm (Diastereomerenpaar). Anschließend wird der Ester mit 50 g Wasser 2 Stunden unter Rückfluss erhitzt und anschließend in Wasserstrahlvakuum vom entstandenen Alkohol-Wasser-Gemisch befreit.

### e) Umsetzung mit Acetylen (Ethin)

In einem 1 I-5-Hals-Kolben, ausgestattet mit Gaseinleitungs-Fritte, Thermometer, Rührer Rückflusskühler und Initiatordosierung wird eine Lösung von 93 g Methanphosphoniger Säure aus d) in 200 g Eisessig gelöst und auf ca. 90°C erhitzt. Unter kräftigem Rühren wird über einen Zeitraum von 5 h eine Lösung von 14 g (5 Mol-%) Ammoniumperoxodisulfat in 30 g Wasser zudosiert. Gleichzeitig wird über die Gaseinleitungsfritte ca. 10 l/h Acetylen durch die Lösung geleitet, wobei überschüssiges Acetylen über eine Verbrennung geführt wird. Die Reaktionstemperatur wird dabei bei ca. 95-105°C gehalten Nach Entfernen des Acetylens mittels Durchleiten von Stickstoff und lässt man abkühlen, wobei Ethan-bis(methylphosphinsäure) ausfällt. Diese wird abfiltriert, zweimal mit je 50 ml Essigsäure gewaschen und bei 100°C/Wasserstrahlvakuum getrocknet. Man erhält so ca. 78 g (70 % d.Th., bezogen auf die eingesetzte Methanphosphonige Säure) Ethan-bis(methylphosphinsäure) in Form farbloser Kristalle mit einem Schmelzpunkt von 197°C. Die Mutterlauge enthält weiteres Endprodukt und kann für weitere Umsetzungen genutzt werden.
Elementaranalyse: P: ber. 33,3 %/gef. 33,0 %;
³¹P-NMR-Spektrum (D₂O): δ = 55 ppm (Singulett); Reinheit (³¹P-NMR): 99 %.

## Patentansprüche

1. Verfahren zur Herstellung von Ethanbis(alkylphosphinsäuren) durch
a) Umsetzung von elementarem gelbem Phosphor mit Alkylhalogeniden in Gegenwart von Alkali- oder Erd-alkalihydroxid zu einem Gemisch, welches als Hauptbestandteile die Alkali- und/oder Erdalkalisalze der Alkylphosphonigen, Phosphorigen und Hypophosphorigen Säure enthält, und
b) Freisetzung der Alkylphosphonigen, Phosphorigen und Hypophosphorigen Säure durch Zugabe von Mineralsäuren sowie gleichzeitiger Ausfällung der Alkali- bzw. Erdalkali-lonen in Form ihrer Mineralsalze, wonach man
c) die alkylphosphonige Säure aus der Mischung der alkylphosphonigen, phosphorigen und Hypophosphorigen Säure verestert,
d) den Ester der alkylphosphonigen Säure aus der Mischung isoliert und zur alkylphosphonigen Säure verseift,
e) durch radikal-initiierte Umsetzung mit Alkinen, wobei es sich bei den Alkinen um Ethin, Propin, 1-Butin, 2-Butin, 1-Phenylbutin, 1-Pentin, 2-Pentin, 1-Hexin, Propargylalkohol, Butindiol, Propiolsäure und Acetylendicarbonsäure-Derivate handelt, aus der alkylphosphonigen Säure die entsprechende Ethan-bis(alkylphosphinsäure) der allgemeinen Formel (I), 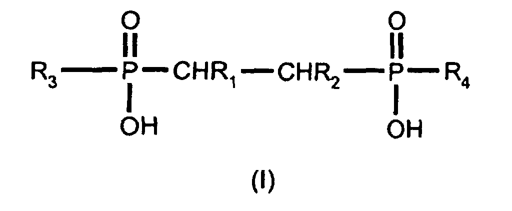 in der R₁ und R₂ gleich oder verschieden sein können und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen, R₃ und R₄ gleich oder verschieden sein können und für eine - ggf. substituierte - Alkylgruppe mit 1 bis 20 C-Atomen steht, herstellt.

2. Verfahren nach Anspruch 1, **dadurch gekennzeichnet, dass** die Fällung der Alkali- bzw. Erdalkali-Mineralsalze mittels Austausch des Lösungsmittels Wasser durch den in Reaktionsschritt c) zu verwendenden Alkohol durchgeführt wird.

3. Verfahren nach Anspruch 1 oder 2, **dadurch gekennzeichnet, dass** im Schritt c) die alkylphosphonige Säure mit einem linearen oder verzweigten Alkohol der allgemeinen Formel R-OH, wobei R für einen linearen oder verzweigten Alkylrest mit 1 bis 10 Kohlenstoffatomen steht, direkt verestert wird.

4. Verfahren nach einem oder mehreren der Ansprüche 1 bis 3, **dadurch gekennzeichnet, dass** es sich bei dem Alkohol um i-Butanol, n-Butanol und/oder 2-Ethylhexanol handelt.

5. Verfahren nach einem oder mehreren der Ansprüche 1 bis 4, **dadurch gekennzeichnet, dass** es sich bei der alkylphosphonigen Säure um Methanphosphonige Säure handelt.

6. Verfahren nach einem oder mehreren der Ansprüche 1 bis 5, **dadurch gekennzeichnet, dass** im Schritt d) der Ester der alkylphosphonigen Säure destillativ entfernt wird.

7. Verfahren nach einem oder mehreren der Ansprüche 1 bis 5, **dadurch gekennzeichnet, dass** im Schritt d) der destillierte Ester der alkylphosphonigen Säure mit Wasser hydrolysiert und der entstandene Alkohol abdestilliert wird.

8. Verfahren nach einem oder mehreren der Ansprüche 1 bis 7, **dadurch gekennzeichnet, dass** man in Schritt e) die Alkylphosphonige Säure in Gegenwart eines Radikalinitiators mit einem Alkin umsetzt.

9. Verfahren nach einem oder mehreren der Ansprüche 1 bis 8, **dadurch gekennzeichnet, dass** als Radikalstarter Azoverbindungen eingesetzt werden.

10. Verfahren nach einem oder mehreren der Ansprüche 1 bis 9, **dadurch gekennzeichnet, dass** es sich bei den Azoverbindungen um kationische und/oder nicht-kationische Azoverbindungen handelt.

11. Verfahren nach einem oder mehreren der Ansprüche 1 bis 10, **dadurch gekennzeichnet, dass** als kationische Azoverbindungen 2,2'-Azobis(2-amidinopropan)-dihydrochlorid oder 2,2'-Azobis(N,N'-dimethylenisobutyramidin)dihydrochlorid und als nicht-kationische Azoverbindungen Azobis(isobutyronitril), 4,4'Azobis(4-cyano-pentansäure) und/oder 2,2'Azobis(2-methylbutyronitril) eingesetzt werden.

12. Verfahren nach einem oder mehreren der Ansprüche 1 bis 8, **dadurch gekennzeichnet, dass** als Radikalstarter peroxidische anorganische und/oder peroxidische organische Radikalstarter eingesetzt werden.

13. Verfahren nach Anspruch 12, **dadurch gekennzeichnet, dass** als peroxidische anorganische Radikalstarter Wasserstoffperoxid, Ammoniumperoxodisulfat und/oder Kaliumoperoxodisulfat und als peroxidische organische Radikalstarter Dibenzoylperoxid, Di-tert.-butyl-peroxid und/oder Peressigsäure eingesetzt werden.

14. Verfahren nach einem oder mehreren der Ansprüche 1 bis 13, **dadurch gekennzeichnet, dass** die Radikalstarter während der Reaktion kontinuierlich zudosiert werden.

15. Verfahren nach einem oder mehreren der Ansprüche 1 bis 14, **dadurch gekennzeichnet, dass** die Radikalstarter während der Reaktion in Form einer Lösung im Alkin kontinuierlich zudosiert werden.

16. Verfahren nach einem oder mehreren der Ansprüche 1 bis 14, **dadurch gekennzeichnet, dass** die Radikalstarter während der Reaktion in Form einer Lösung im verwendeten Lösungsmittel kontinuierlich zudosiert werden.

17. Verfahren nach einem oder mehreren der Ansprüche 1 bis 16, **dadurch gekennzeichnet, dass** die in Schritt d) nach der Verseifung erhaltene Alkylphosphonige Säure in Gegenwart eines Radikalinitiators mit Alkinen der allgemeinen Formel (II),
R₁ - C ≡ C - R₂ (II)
in der R₁ und R₂ gleich oder verschieden sein können und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen, umgesetzt wird.

18. Verfahren nach einem oder mehreren der Ansprüche 1 bis 17, **dadurch gekennzeichnet, dass** als Alkin Ethin (Acetylen) eingesetzt wird.

19. Verfahren nach einem oder mehreren der Ansprüche 1 bis 18, **dadurch gekennzeichnet, dass** die Umsetzung im Schritt e) bei einer Temperatur von 40 bis 200°C, bevorzugt von 70 bis 130°C, erfolgt.

20. Verfahren nach einem oder mehreren der Ansprüche 1 bis 19, **dadurch gekennzeichnet,, dass** die Umsetzung in Gegenwart eines Lösungsmittels erfolgt.

21. Verfahren nach einem oder mehreren der Ansprüche 1 bis 20, **dadurch gekennzeichnet, dass** die Umsetzung durch Einleiten von gasförmigem Ethin unter Normaldruck erfolgt.

22. Verfahren nach einem oder mehreren der Ansprüche 1 bis 20, **dadurch gekennzeichnet, dass** die Umsetzung unter Druck erfolgt.

23. Verfahren nach einem oder mehreren der Ansprüche 1 bis 22, **dadurch gekennzeichnet, dass** man gelben Phosphor mit Methylchlorid in Gegenwart von Natronlauge und dem Phasentransferkatalysator Tributylhexadecylphosphoniumbromid zum Natriumsalz der Methylphosphonigen Säure umsetzt, aus diesem durch Zusatz von Salzsäure die freie Säure freisetzt, diese mit 2-Ethylhexanol im Gemisch verestert, den Ester destillativ isoliert, hydrolysiert und die entstandene reine Methanphosphonige Säure mit Acetylen in Gegenwart eines kationischen oder nicht-kationischen Radikalstarters oder in Gegenwart eines peroxidischen Radikalstarters zur Ethan-bis(methylphosphinsäure) umsetzt.

24. Verfahren nach einem oder mehreren der Ansprüche 1 bis 22, **dadurch gekennzeichnet, dass** man gelben Phosphor mit Methylchlorid in Gegenwart von Natronlauge und dem Phasentransferkatalysator Tributylhexadecylphosphoniumbromid zum Natriumsalz der Methylphosphonigen Säure umsetzt, aus diesem durch Zusatz von Salzsäure die freie Säure freisetzt, diese mit 2-Ethylhexanol im Gemisch verestert, den Ester destillativ isoliert, hydrolysiert und die entstandene reine Methanphosphonige Säure mit Acetylen in Gegenwart eines kationischen oder nicht-kationischen Radikalstarters oder in Gegenwart eines peroxidischen Radikalstarters in Essigsäure zur Ethan-bis(methylphosphinsäure) umsetzt und diese kontinuierlich aus dem Reaktionsgemisch durch Umlauf-Filtration entfernt und ebenso kontinuierlich die verbrauchte Methanphosphonige Säure durch neue ersetzt.

## Claims

1. A process for preparing ethanebis(alkylphosphinic) acids by
a) reacting elemental yellow phosphorus with alkyl halides in the presence of alkali metal hydroxide or of alkaline earth metal hydroxide to give a mixture whose main constituents are the alkali metal salts and/or alkaline earth metal salts of alkylphosphonous, phosphorous, and hypophosphorous acid,
b) liberating alkylphosphonous, phosphorous, and hypophosphorous acid by adding mineral acids, and also at the same time precipitating the alkali metal ions and, respectively, alkaline earth metal ions in the form of their salt of the mineral acids, and then
c) esterifying the alkylphosphonous acid from the mixture of the alkylphosphonous, phosphorous, and hypophosphorous acid,
d) isolating the ester of alkylphosphonous acid from the mixture and hydrolyzing the same to give alkylphosphonous acid, and
e) preparing, from the alkylphosphonous acid, the corresponding ethanebis(alkylphosphinic) acid of the general formula (I) 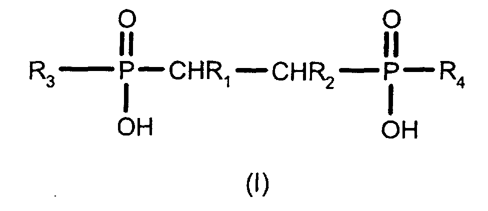
where R₁ and R₂ may be identical or different and are hydrogen, a carboxy group, a carboxylic acid derivative, an unsubstituted or substituted alkyl group having from 1 to 10 carbon atoms, phenyl, benzyl, or alkyl-substituted aromatics, and R₃ and R₄ may be identical or different and are an unsubstituted or substituted alkyl group having from 1 to 20 carbon atoms, by free-radical-initiated reaction with alkynes which are ethyne, propyne, 1-butyne, 2-butyne, 1-phenylbutyne, 1-pentyne, 2-pentyne, 1-hexyne, propargyl alcohol, butynediol, propiolic acid, and derivatives of acetylenedicarboxylic acid.

2. The process as claimed in claim 1, wherein the alkali metal salt of the mineral acid and, respectively, alkaline earth metal salt of the mineral acid is precipitated by exchanging the solvent, water, for the alcohol to be used in reaction step c).

3. The process as claimed in claim 1 or 2, wherein, in step c), the alkylphosphonous acid is esterified directly with a linear or branched alcohol of the general formula R-OH, where R is a linear or branched alkyl radical having from 1 to 10 carbon atoms.

4. The process as claimed in one or more of claims 1 to 3, wherein the alcohol is isobutanol, n-butanol, and/or 2-ethylhexanol.

5. The process as claimed in one or more of claims 1 to 4, wherein the alkylphosphonous acid is methanephosphonous acid.

6. The process as claimed in one or more of claims 1 to 5, wherein, in step d), the ester of the alkylphosphonous acid is removed by distillation.

7. The process as claimed in one or more of claims 1 to 5, wherein, in step d), the distilled ester of alkylphosphonous acid is hydrolyzed with water and the resultant alcohol is distilled off.

8. The process as claimed in one or more of claims 1 to 7, wherein, in step e), the alkylphosphonous acid is reacted with an alkyne in the presence of a free-radical initiator.

9. The process as claimed in one or more of claims 1 to 8, wherein the free-radical initiators used comprise azo compounds.

10. The process as claimed in one or more of claims 1 to 9, wherein the azo compounds are cationic and/or non-cationic azo compounds.

11. The process as claimed in one or more of claims 1 to 10, wherein the cationic azo compounds used comprise 2,2'-azobis(2-amidinopropane) dihydrochloride or 2,2'-azobis(N,N'-dimethyleneisobutyramidine) dihydrochloride, and the non-cationic azo compounds used comprise azobis(isobutyronitrile), 4,4'-azobis(4-cyanopentanoic acid) and/or 2,2'-azobis(2-methylbutyronitrile).

12. The process as claimed in one or more of claims 1 to 8, wherein the free-radical initiators used comprise peroxidic inorganic and/or peroxidic organic free-radical initiators.

13. The process as claimed in claim 12, wherein the peroxidic inorganic free-radical initiators used comprise hydrogen peroxide, ammonium peroxodisulfate, and/or potassium peroxodisulfate, and the peroxidic organic free-radical initiators used comprise dibenzoyl peroxide, di-tert-butyl peroxide, and/or peracetic acid.

14. The process as claimed in one or more of claims 1 to 13, wherein the free-radical initiators are metered in continuously during the reaction.

15. The process as claimed in one or more of claims 1 to 14, wherein the free-radical initiators metered in continuously during the reaction are in the form of a solution in the alkyne.

16. The process as claimed in one or more of claims 1 to 14, wherein the free-radical initiators metered in continuously during the reaction are in the form of a solution in the solvent used.

17. The process as claimed in one or more of claims 1 to 16, wherein the alkylphosphonous acid obtained after the hydrolysis in step d) is reacted, in the presence of a free-radical initiator, with alkynes of the general formula (II)
R₁ - C ≡ C - R₂ (II)
where R₁ and R₂ may be identical or different and are hydrogen, a carboxy group, a carboxylic acid derivative. an unsubstituted or substituted alkyl group having from 1 to 10 carbon atoms, phenyl, benzyl, or alkyl-substituted aromatics.

18. The process as claimed in one or more of claims 1 to 17, wherein the alkyne used comprises ethyne (acetylene).

19. The process as claimed in one or more of claims 1 to 18, wherein the reaction in step e) takes place at a temperature of from 40 to 200°C, preferably from 70 to 130°C.

20. The process as claimed in one or more of claims 1 to 19, wherein the reaction takes place in the presence of a solvent.

21. The process as claimed in one or more of claims 1 to 20, wherein the reaction takes place by introducing gaseous ethyne at atmospheric pressure.

22. The process as claimed in one or more of claims 1 to 20, wherein the reaction takes place at superatmospheric pressure.

23. The process as claimed in one or more of claims 1 to 22, wherein yellow phosphorus is reacted with methyl chloride in the presence of sodium hydroxide solution and of the phase-transfer catalyst tributylhexadecylphosphonium bromide, to give the sodium salt of the methylphosphonous acid, and the free acid is liberated from this by adding hydrochloric acid, and is esterified with 2-ethylhexanol in the mixture, the ester is isolated by distillation and hydrolyzed, and the resultant pure methanephosphonous acid is reacted with acetylene in the presence of a cationic or non-cationic free-radical initiator or in the presence of a peroxidic free-radical initiator, to give ethanebis(methylphosphinic) acid.

24. The process as claimed in one or more of claims 1 to 22, wherein yellow phosphorus is reacted with methyl chloride in the presence of sodium hydroxide solution and of the phase-transfer catalyst tributylhexadecylphosphonium bromide, to give the sodium salt of the methylphosphonous acid, and the free acid is liberated from this by adding hydrochloric acid, and is esterified with 2-ethylhexanol in the mixture, the ester is isolated by distillation and hydrolyzed, and the resultant pure methanephosphonous acid is reacted with acetylene in the presence of a cationic or non-cationic free-radical initiator or in the presence of a peroxidic free-radical initiator in acetic acid, to give ethanebis(methylphosphinic) acid, and this is continuously removed from the reaction mixture by a circulating filter system, and the methanephosphonous acid consumed is likewise continuously replaced by fresh acid.

## Revendications

1. Procédé pour la préparation d'acide éthane-bis(alkylphosphinique) par
a) réaction de phosphore jaune élémentaire avec des halogénures d'alkyle en présence d'hydroxyde de métaux alcalins ou alcalino-terreux pour donner un mélange qui contient comme constituants principaux les sels de métaux alcalins et/ou alcalino-terreux de l'acide alkylphosphoneux, phosphoreux et hypophosphoreux, et
b) libération de l'acide alkylphosphoneux, phosphoreux et hypophosphoreux par addition d'acides minéraux et en faisant précipiter en même temps les ions des métaux alcalins et alcalino-terreux sous la forme de leurs sels des acides minéraux, et ensuite
c) en estérifiant l'acide alkylphosphoneux du mélange de l'acide alkylphosphoneux, phosphoreux et hypophosphoreux,
d) en isolant du mélange l'ester de l'acide alkylphosphoneux et en le saponifiant en acide alkylphosphoneux,
e) en préparant, par réaction initiée par des radicaux libres avec des alcynes, dans laquelle il s'agit pour les alcynes de l'éthyne, le propyne, 1-butyne, 2-butyne, 1-phénylbutyne, 1-pentyne, 2-pentyne, 1-hexyne, le propargylalcool, le butynediol, l'acide propanoïque et les dérivés d'acide acétylène-dicarboxylique, à partir de l'acide alkylphosphoneux, l'acide éthane-bis(alkylphosphinique) correspondant de formule générale (I), 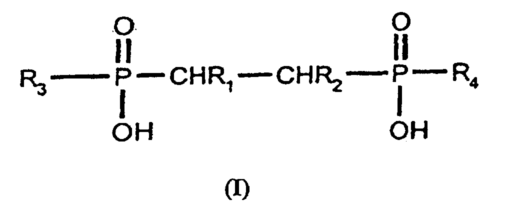
dans laquelle R₁ et R₂ peuvent être identiques ou différents et représentent un hydrogène, un groupe carboxyle, un dérivé d'acide carboxylique, un groupe alkyle - éventuellement substitué - avec de 1 à 10 atomes de carbone, un phényle, benzyle ou des composés aromatiques substitués par alkyle, R₃ et R₄ peuvent être identiques ou différents et représentent un groupe alkyle - éventuellement substitué - avec de 1 à 20 atomes de carbone.

2. Procédé selon la revendication 1, **caractérisé en ce qu'**on réalise la précipitation des sels minéraux de métaux alcalins ou alcalino-terreux par échange de solvant de l'eau par l'alcool à utiliser dans l'étape de réaction c).

3. Procédé selon la revendication 1 ou 2, **caractérisé en ce qu'**on estérifie directement à l'étape c) l'acide alkylphosphoneux avec un alcool linéaire ou ramifié de formule générale R-OH, dans laquelle R représente un groupe alkyle linéaire ou ramifié ayant de 1 à 10 atomes de carbone.

4. Procédé selon l'une ou plusieurs des revendications 1 à 3, **caractérisé en ce qu'**il s'agit pour l'alcool du i-butanol, n-butanol et/ou 2-éthylhexanol.

5. Procédé selon l'une ou plusieurs des revendications 1 à 4, **caractérisé en ce qu'**il s'agit pour l'acide alkylphosphoneux d'acide méthanephosponeux.

6. Procédé selon l'une ou plusieurs des revendications 1 à 5, **caractérisé en ce qu'**on élimine par distillation à l'étape d) l'ester de l'acide alkylphosphoneux.

7. Procédé selon l'une ou plusieurs des revendications 1 à 5, **caractérisé en ce qu'**on hydrolyse avec de l'eau à l'étape d) l'ester distillé de l'acide alkylphosphoneux et **en ce qu'**on distille l'alcool produit.

8. Procédé selon l'une ou plusieurs des revendications 1 à 7, **caractérisé en ce qu'**on met à réagir à l'étape e) l'acide alkylphosphoneux avec un alcyne en présence d'un amorceur radicalaire.

9. Procédé selon l'une ou plusieurs des revendications 1 à 8, **caractérisé en ce qu'**on utilise comme amorceur radicalaire des composés azoïques.

10. Procédé selon l'une ou plusieurs des revendications 1 à 9, **caractérisé en ce qu'**il s'agit pour les composés azoïques de composés azoïques cationiques et/ou non cationiques.

11. Procédé selon l'une ou plusieurs des revendications 1 à 10, **caractérisé en ce qu'**on utilise comme composés azoïques cationiques le 2,2'-azobis(2-amidinopropane)-dichlorhydrate ou le 2,2'-azobis(N,N'-diméthylène-isobutyramidine)dichlorhydrate et comme composés azoïques non cationiques l'azobis(isobutyronitrile), le 4,4'-azobis(acide 4-cyano-pentanoïque) et/ou le 2,2'-azobis(2-méthylbutyronitrile).

12. Procédé selon l'une ou plusieurs des revendications 1 à 8, **caractérisé en ce qu'**on utilise comme amorceur radicalaire des amorceurs radicalaires inorganiques peroxydiques et/ou organiques peroxydiques.

13. Procédé selon la revendication 12, **caractérisé en ce qu'**on utilise comme amorceurs radicalaires inorganiques peroxydiques le peroxyde d'hydrogène, le peroxodisulfate d'ammonium et/ou le peroxodisulfate de potassium et comme amorceurs radicalaires organiques peroxydiques le peroxyde de dibenzoyle, le peroxyde de di-tert.-butyle et/ou l'acide peracétique.

14. Procédé selon l'une ou plusieurs des revendications 1 à 13, **caractérisé en ce qu'**on ajoute l'amorceur radicalaire en continu de manière dosée pendant la réaction.

15. Procédé selon l'une ou plusieurs des revendications 1 à 14, **caractérisé en ce qu'**on ajoute l'amorceur radicalaire en continu de manière dosée pendant la réaction sous la forme d'une solution dans l'alcyne.

16. Procédé selon l'une ou plusieurs des revendications 1 à 14, **caractérisé en ce qu'**on ajoute l'amorceur radicalaire en continu de manière dosée pendant la réaction sous la forme d'une solution dans le solvant utilisé.

17. Procédé selon l'une ou plusieurs des revendications 1 à 16, **caractérisé en ce qu'**on met à réagir à l'étape d) l'acide alkylphosphoneux obtenu après la saponification en présence d'un amorceur radicalaire avec des alcynes de formule générale (II),
**R**_{**1**} **- C ≡ C - R**_{**2**} (II)
dans laquelle R₁ et R₂ peuvent être identiques ou différents et représentent un hydrogène, un groupe carboxyle, un dérivé d'acide carboxylique, un groupe alkyle - éventuellement substitué - avec de 1 à 10 atomes de carbone, un phényle, benzyle ou des composés aromatiques substitués par alkyle.

18. Procédé selon l'une ou plusieurs des revendications 1 à 17, **caractérisé en ce qu'**on utilise comme alcyne l'éthyne (acétylène).

19. Procédé selon l'une ou plusieurs des revendications 1 à 18, **caractérisé en ce qu'**on réalise la réaction à l'étape e) à une température de 40 à 200 °C, de préférence de 70 à 130 °C.

20. Procédé selon l'une ou plusieurs des revendications 1 à 19, **caractérisé en ce qu'**on réalise la réaction en présence d'un solvant.

21. Procédé selon l'une ou plusieurs des revendications 1 à 20, **caractérisé en ce qu'**on réalise la réaction par introduction d'éthyne gazeux sous pression normale.

22. Procédé selon l'une ou plusieurs des revendications 1 à 20, **caractérisé en ce qu'**on réalise la réaction sous pression.

23. Procédé selon l'une ou plusieurs des revendications 1 à 22, **caractérisé en ce qu'**on met à réagir du phosphore jaune avec du chlorure de méthyle en présence d'hydroxyde de sodium et du catalyseur de transfert de phase bromure de tributylhexadécylphosphonium pour obtenir le sel de sodium de l'acide méthylphosphoneux, on libère à partir de celui-ci l'acide libre par addition d'acide chlorhydrique, on estérifie celui-ci dans le mélange avec du 2-éthylhexanol, on isole l'ester par distillation, on l'hydrolyse et on met à réagir l'acide méthanephosponeux pur produit avec l'acétylène en présence d'un amorceur radicalaire cationique ou non cationique ou en présence d'un amorceur radicalaire peroxydique pour obtenir l'acide éthane-bis(méthylphosphinique).

24. Procédé selon l'une ou plusieurs des revendications 1 à 22, **caractérisé en ce qu'**on met à réagir du phosphore jaune avec du chlorure de méthyle en présence d'hydroxyde de sodium et du catalyseur de transfert de phase bromure de tributylhexadécylphosphonium pour obtenir le sel de sodium de l'acide méthylphosphoneux, on libère à partir de celui-ci l'acide libre par addition d'acide chlorhydrique, on estérifie celui-ci dans le mélange avec du 2-éthylhexanol, on isole l'ester par distillation, on l'hydrolyse et on met à réagir l'acide méthanephosponeux pur produit avec l'acétylène en présence d'un amorceur radicalaire cationique ou non cationique ou en présence d'un amorceur radicalaire peroxydique dans l'acide acétique pour obtenir l'acide éthane-bis(méthyl-phosphinique) et on enlève celui-ci en continu du mélange réactionnel par filtration en circuit fermé et on remplace également en continu l'acide méthanephosponeux consommé par du nouveau.
